(19) Europäisches Patentamt
European Patent Office
Office européen des brevets

(11) **EP 0 895 197 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(51) Int Cl.:
*G07C 3/00* *(2006.01)*    *G05B 23/02* *(2006.01)*

(21) Anmeldenummer: **97810550.0**

(22) Anmeldetag: **31.07.1997**

(54) **Verfahren zum Überwachen von Anlagen mit mechanischen Komponenten**

Method for monitoring installations with mechanical components

Procédé pour surveiller des installations avec des composants mécaniques

(84) Benannte Vertragsstaaten:
**AT CH DE FR GB IT LI NL**

(43) Veröffentlichungstag der Anmeldung:
**03.02.1999 Patentblatt 1999/05**

(73) Patentinhaber: **Sulzer Markets and Technology AG**
**8401 Winterthur (CH)**

(72) Erfinder:
• **Milek, Janusz, Dr.**
**8032 Zürich (CH)**
• **Güttinger, Heinz**
**8200 Schaffhausen (CH)**

(74) Vertreter: **Heinen, Detlef**
**Sulzer Management AG**
**KS Patente 0007**
**8401 Winterthur (CH)**

(56) Entgegenhaltungen:
| | |
|---|---|
| **EP-A- 0 002 232** | **EP-A- 0 205 764** |
| **EP-A- 0 516 534** | **WO-A-90/16048** |
| **DD-A- 146 359** | **DE-A- 3 133 222** |
| **DE-C- 4 243 882** | **FR-A- 2 676 556** |
| **US-A- 4 609 992** | |

**Beschreibung**

Die Erfindung betrifft ein Verfahren zur Überwachung von Anlagen mit mechanischen, insbesondere hydromechanischen, Komponenten.

Für industrielle Anwendungen, beispielsweise zur Erzeugung elektrischer Energie, werden häufig komplexe Anlagen eingesetzt, die eine Vielzahl von Komponenten umfassen. Als ein repräsentatives Beispiel wird im folgenden auf ein Wasserkraftwerk Bezug genommen, in dem Turbinen zur Erzeugung elektrischer Energie mittels Wasserkraft angetrieben werden. In diesem Beispiel sind also die hydromechanischen Komponenten die Turbinen, die durch strömendes Wasser in Rotation versetzt werden und die Generatoren antreiben.

Unter sicherheitstechnischen und wirtschaftlichen Aspekten ist es sehr wichtig, solche Anlagen und ihre Komponenten im Betrieb ständig zu überwachen, um Betriebsstörungen, das heisst Abweichungen von dem normalen Betriebsverhalten, möglichst frühzeitig und zuverlässig zu erkennen. Häufig werden eine Mehrzahl von Zustandsgrössen, wie beispielsweise Druck, Temperaturen des Wassers an verschiedenen Orten der Anlage, Durchflussmengen, Drehzahlen, Leistungen, Lagertemperaturen usw. messtechnisch erfasst und z. B. als Funktion der Zeit gespeichert bzw. graphisch dargestellt. Üblicherweise arbeiten solche Komponenten wie Turbinen aber nicht an einem festen Betriebs- oder Arbeitspunkt, sodass der zeitliche Verlauf der zur Überwachung erfassten Messgrössen auch im normalen, das heisst störungsfreien, Betrieb starke Schwankungen aufweist. Deshalb ist es anhand des zeitlichen Verlaufs der Messgrössen - wenn überhaupt - nur sehr schwer zu beurteilen, ob die Anlage störungsfrei arbeitet. Zudem ist es schwierig, zeitlich sehr langsame Veränderungen, wie sie beispielsweise durch betriebsbedingten Verschleiss auftreten, zu erkennen und zu beurteilen.

Prinzipiell wäre es zwar möglich, die gesamte Anlage physikalisch zu modellieren, das heisst, die physikalischen Zusammenhänge zwischen den einzelnen Zustandsgrössen zu berechnen, und dann durch einen Vergleich zwischen solchen physikalischen Modellrechnungen und messtechnisch erfassten Grössen eine Beurteilung des Betriebszustands durchzuführen. In der Praxis ist dieser Weg jedoch häufig viel zu kostenintensiv und aufwendig, sodass er insbesondere für industrielle Anwendungen wenig geeignet ist. Ein Grund dafür ist, dass industrielle Anlagen eine enorme Komplexität mit zahlreichen in gegenseitiger Wechselwirkung stehenden Komponenten aufweisen, sodass ein einigermassen zuverlässiges physikalisches Modell eine Vielzahl von Zusammenhängen zwischen den einzelnen Zustandsgrössen berücksichtigen muss, wodurch seine Erstellung zu einer äusserst schwierigen, zeit- und kostenintensiven Aufgabe wird.

Deshalb ist es insbesondere für industrielle Anwendungen in der Praxis üblich, zur Überwachung der Anlage für einige ausgewählte Zustandsgrössen, beispielsweise die Temperatur im Lager einer rotierenden Welle oder die Temperatur eines Kühlmittels, fixe Schwellenwerte vorzugeben, bei deren Überschreitung ein Alarm ausgelöst wird oder eine Warnung erfolgt. Diese Art der Überwachung weist jedoch Nachteile auf. Es besteht nämlich die Gefahr, dass real existierende Betriebsstörungen oder Fehler in der Anlage übersehen oder zu spät erkannt werden. So ist es beispielsweise möglich, dass ein Lager einer Welle oder eine Dichtung einen Schaden aufweist, die überwachte Temperatur aber den zur Alarmauslösung nötigen Schwellenwert nicht überschreitet, weil die Turbine momentan nur bei niedriger Last arbeitet. Andererseit ist es auch möglich, dass Fehlalarm ausgelöst wird, beispielsweise wenn die Turbine kurzfristig unter sehr hoher Last arbeitet, sodass ohne das Vorliegen eines Schadens der Schwellenwert für die Alarmauslösung überschritten wird. Ein solcher Fehlalarm kann dazu führen, dass ohne eigentliche Notwendigkeit die Anlage abgeschaltet wird, was insbesondere unter wirtschaftlichen Aspekten sehr nachteilig ist.

Das Dokument DE-C1-42 43 882 beschreibt ein Verfahren zur Überwachung eines technischen Prozesses unter Verwendung von Sensoren zur Aufnahme von zu messenden Überwachungsvariablen und von Parametern, die den Prozess beschreiben. Dieses bekannte Verfahren zeichnet sich dadurch aus, dass nach einer Normalzustandsprüfung und einer Prüfung auf Vollständigkeit im Parameterraum bei Auftreten neuer Betriebszustände für die jeweilige Überwachungsvariable, eine individuelle Modellbildung neu gestartet wird.

Ausgehend von diesem Stand der Technik ist es daher eine Aufgabe der Erfindung, ein Verfahren zur Überwachung von Anlagen mit mechanischen, insbesondere hydromechanischen, Komponenten, bereitzustellen, dass die erwähnten Nachteile nicht aufweist. Das Verfahren soll eine zuverlässige und frühzeitige Erkennung von Betriebsstörungen ermöglichen und für industrielle Anwendungen geeignet sein. Insbesondere soll sich das Verfahren zur Überwachung solcher Anlagen bzw. Komponenten eignen, die an variablen Arbeitspunkten betrieben werden. Auch soll das Verfahren eine einfache Beurteilung des Betriebszustands der Komponenten ermöglichen. Mit dem Verfahren soll es ferner möglich sein, auch zeitlich langsam fortschreitende Veränderungen, wie sie z. B. durch Verschleiss verursacht werden, zu erkennen. Ausserdem soll es das Verfahren ermöglichen, Trends für den weiteren Betrieb der Komponenten zu erkennen.

Das diese Aufgaben lösende Verfahren zur Überwachung von Anlagen mit mechanischen, insbesondere hydromechanischen, Komponenten, die an variablen Arbeitspunkten betreibbar sind, ist durch die Merkmale des unabhängigen Anspruchs gekennzeichnet. Das erfindungsgemässe Verfahren umfasst also die folgenden Schritte:

Während des Betriebs der Komponenten werden in vorgebbaren zeitlichen Abständen für einen festgelegten Satz von Zustandsgrössen jeweils Messwerte erfasst. Die während einer vorgeschalteten Modellierungsphase, bei der die Anlage im störungsfreien Betrieb arbeitet, für verschiedenen Arbeitspunkte erfassten Messwerte werden zur Erstellung eines Modells für das Betriebsverhalten der Komponenten herangezogen, wobei die Eingangsvariablen des Modells zumindest ein Teil des Satzes der Zustandsgrössen sind und die Ausgangsgrössen einen Modellwert für mindestens eine der Zustandsgrössen umfassen. Durch Vergleichen des jeweiligen Modellwerts mit dem ihm entsprechenden tatsächlichen Messwert der Modellierungsphase wird jeweils ein Residuum bestimmt. Das Modell wird durch Bestimmen von Modellparametern so optimiert, dass ein aus den Residuen bestimmbarer Modellfehler minimal wird. Mit Hilfe des Modells für das Betriebsverhalten wird in vorgebbaren zeitlichen Abständen mindestens eine Überwachungsgrösse bestimmt, die unabhängig vom jeweils aktuellen Arbeitspunkt ist. Der zeitliche Verlauf der Überwachungsgrösse wird zur Beurteilung des Verschleisses in den Komponenten und/oder zur Detektion von Betriebsstörungen herangezogen.

Da das Modell für das Betriebsverhalten anhand von experimentell bestimmten Messwerten, die während des Betriebs der Anlage erfasst werden, erstellt und optimiert wird, sind aufwendige und schwierige Bestimmungen der physikalischen Zusammenhänge zwischen den einzelnen Zustandsgrössen nicht vonnöten, sodass das erfindungsgemässe Verfahren insbesondere für industrielle Anwendungen geeignet ist.

Das erfindungsgemässe Verfahren bedient sich einer Überwachungsgrösse, die unabhängig vom jeweils aktuellen Arbeitspunkt ist, das heisst, Schwankungen in den Messwerten für die Zustandsgrössen, die lediglich auf Änderungen des Arbeitspunkts beruhen, führen nicht zu signifikanten Änderungen in der Überwachungsgrösse. Das Verfahren berücksichtigt also die gegenseitige Beeinflussung zwischen den Zustandsgrössen bei variierenden Arbeitspunkten. Mit anderen Worten bedeutet dies, dass das erfindungsgemässe Überwachungsverfahren nicht mit fixen Schwellenwerten für bestimmte Zustandsgrössen arbeitet, sondern dass die Schwellenwerte an den jeweils aktuellen Betriebszustand angepasst werden. Dies ermöglicht eine sehr zuverlässige und frühzeitige Erkennung sowohl von Betriebsstörungen als auch von langsam fortschreitenden Veränderungen, wie sie beispielsweise durch Verschleiss verursacht werden. Das Auslösen von Fehlalarm und das "Übersehen" von Betriebsstörungen, z. B. im Teillastbetrieb, tritt bei dem erfindungsgemässen Verfahren praktisch nicht mehr auf Dies ist insbesondere unter wirtschaftlichen und sicherheitstechnischen Aspekten vorteilhaft. Durch die zuverlässige Überwachung lassen sich unnötige Stillstandzeiten der Anlage vermeiden und die Instandhaltungskosten deutlich reduzieren.

Da die Überwachungsgrösse unabhängig vom jeweils aktuellen Arbeitspunkt ist, ergibt sich für sie, solange die Anlage bzw. die Komponenten störungs- und verschleissfrei arbeiten, ein im wesentlichen zeitlich konstanter Wert. Sobald es zu störungs- oder verschleissbedingten Änderungen in der Komponenten kommt, weicht die Überwachungsgrösse von ihrem konstanten Wert ab. Somit ist anhand einer graphische Darstellung der Überwachungsgrösse als Funktion der Zeit in sehr einfacher Weise ein Abweichen von dem normalen Betriebszustand erkennbar.

Vorzugsweise erfolgt mittels einer Auswerte- und Speichervorrichtung in vorgebbaren zeitlichen Abständen eine Aktualisierung zur Bestimmung eines aktuellen Modells, bei welcher die seit der letzten Aktualisierung des Modells erfassten Messwerte berücksichtigt werden. Hierdurch wird gewährleistet, dass jeweils die zeitlich neusten Messwerte in die Überwachung eingehen.

Bevorzugt werden die zu unterschiedlichen Zeiten bestimmten Modelle jeweils zusammen mit Kenngrössen, welche repräsentativ für die Güte des jeweiligen Modells sind, in der Auswerte-und Speichervorrichtung gespeichert. Hierdurch ist es möglich, auch im Nachhinein die zeitliche Entwicklung der Zustandsgrössen zu rekonstruieren. Besonders vorteilhaft ist dabei, dass auf eine dauerhafte Speicherung sämtlicher erfasster Messwerte verzichtet werden kann und nur ein stark reduzierter Datensatz, nämlich jeweils die Modellparameter oder Grössen, aus denen sich diese bestimmen lassen, sowie die Kenngrössen, gespeichert werden muss, um später eine Rekonstruktion der Historie zu ermöglichen. Die Kenngrössen können z. B. Korrelationsmatrizen und geschätzte Varianzen des Messrauschens sein.

Auch ist es bevorzugt, bei der Aktualisierung zur Bestimmung des aktuellen Modells die älteren Modelle, insbesondere in gewichteter Weise, zu berücksichtigen. Dadurch lässt sich beispielsweise der zeitliche Verlauf einer auftretenden Störung oder eines Verschleisses besser beurteilen.

Bei einer bevorzugten Verfahrensführung wird das jeweils aktuelle Modell mittels der Auswerte- und Speichervorrichtung optimiert, indem für die seit der letzten Aktualisierung des Modells erfassten Messwerte durch Vergleichen mit den ihnen entsprechenden Modellwerten jeweils ein Residuum für die zugehörige Zustandsgrösse berechnet wird, und die Modellparameter des aktuellen Modells so bestimmt werden, dass der aus den Residuen bestimmbare Modellfehler minimal wird. Das bedeutet, dass unabhängig davon, ob Betriebsstörungen auftreten oder nicht, das Modell immer so aktualisiert wird, dass es die jeweils jüngsten Messwerte möglichst gut rekonstruiert, mithin ein zu jedem Zeitpunkt möglichst guter Repräsentant der zu überwachenden Komponente ist. Treten Betriebsstörungen auf, so werden diese beabsichtigt in das Modell eingearbeitet. Die Überwachung wird bei dieser Verfahrensführung vorteilhafterweise wie folgt durchgeführt:

Es wird mindestens ein Referenzarbeitspunkt fixiert. Von der Auswerte- und Speichervorrichtung wird nach jeder Aktualisierung des Modells für den fixierten Referenzarbeitspunkt mittels des jeweils aktuellen Modells der zugehörige Modellwert als Nominalwert für die entsprechende Zustandsgrösse bestimmt. Der zeitliche Verlauf des Nominalwerts wird zur Beurteilung des Verschleisses in den Komponenten und/oder zur Detektion von Betriebsstörungen herangezogen.

Bei dieser Verfahrensführung ist also die Überwachungsgrösse der zeitliche Verlauf des Nominalwerts, der sich aus dem fixierten Referenzarbeitspunkt und dem jeweils aktuellen Modell ergibt. Wenn keine Änderungen (Betriebsstörungen, Verschleiss) in der zu überwachenden Komponente auftreten, so erfolgen auch bei der jeweiligen Aktualisierung des Modells keine wesentlichen Änderungen der Modellparameter. Folglich ist auch der Nominalwert für den fixierten Referenzarbeitspunkt zeitlich im wesentlichen konstant. Treten dagegen Änderungen in den Komponenten auf, so führt dies dazu, dass sich die Modellparameter bei der Aktualisierung ändern. Dadurch ändert sich aber normalerweise auch der Nominalwert, der mittels des jeweils aktuellen Modells für den fixierten Referenzarbeitspunkt bestimmt wird. Anhand der zeitlichen Änderung des Nominalwerts lassen sich somit Änderungen in den Komponenten sehr einfach erkennen. Zusätzlich kann die Änderungsrate des Nominalwerts Aufschluss darüber geben, ob die Änderung in den Komponenten auf einer Betriebsstörung beruht oder auf Verschleisserscheinungen.

Insbesondere ermöglicht es diese Verfahrensführung auch, aus dem zeitlichen Verlauf des Nominalwerts Trends für den zukünftigen Betrieb der Komponenten zu erkennen.

Weitere vorteilhafte Massnahmen und bevorzugte Verfahrensausgestaltungen ergeben sich aus den abhängigen Ansprüchen.

Im folgenden wird die Erfindung anhand von Beispielen und anhand der Zeichnung näher erläutert. In der Zeichnung zeigen:

Fig. 1:     Ein Blockschema einer Anlage zur Veranschaulichung eines Ausführungsbeispiels des erfindungsgemässen Verfahrens,

Fig. 2     ein Flussschema zur Veranschaulichung der Modellierungsphase eines Ausführungsbeispiels des erfindungsgemässen Verfahrens, und

Fig. 3     ein Flussschema zur Veranschaulichung eines Ausführungsbeispiels, bei dem eine Aktualisierung des Modells erfolgt.

Das erfindungsgemässe Verfahren wird im folgenden mit beispielshaftem Charakter unter Bezugnahme auf ein Wasserkraftwerk mit Turbinen erläutert. Dabei steht das Wasserkraftwerk als repräsentatives Beispiel für eine zu überwachende Anlage und die Turbinen dienen als Beispiel für die hydromechanischen Komponenten der Anlage. Es versteht sich, dass die Erfindung nicht auf solche Fälle beschränkt ist. Die Komponenten können auch andere Strömungsmaschinen wie beispielsweise Pumpen sein oder sonstige mechanische Systeme wie Dampfturbinen, Dampfkessel, Kompressoren, Generatoren, Motoren, Getriebe. Die Anlagen, in denen solche Komponenten integriert sind, können beispielsweise auch Heizanlagen, Lokomotiven, Webmaschinen oder Plasmaspritzanlagen sein.

Mit dem Begriff "Zustandsgrössen" sind solche unmittelbar oder mittelbar erfassbaren Grössen gemeint, die der Charakterisierung des Betriebszustands der Komponente bzw. der Anlage dienlich sind oder einen Einfluss auf den Betriebszustand haben. Für das konkrete Beispiel der Turbine bzw. des Wasserkraftwerks umfasst der Begriff Zustandsgrösse beispielsweise die folgenden Grössen: Leistung, Druck vor und hinter der Turbine, Durchflussmenge des Wassers, Temperatur des Wassers, Drehzahl der Turbine, Temperatur des Kühlmediums, Temperatur im Generator, Temperaturen in Wellenlagern oder -dichtungen, Schallemissionen, Vibrationen, Schaufelstellungen usw. Einige der Zustandsgrössen sind vom Bedienpersonal direkt beeinflussbar, wie beispielsweise die Durchflussmenge an Wasser durch die Turbine, andere Zustandsgrössen, wie beispielsweise die Temperatur im Wellenlager oder in der Wellendichtung, sind dagegen nicht direkt beeinflussbar. Es gibt eine Vielzahl von Zustandsgrössen, die jedoch nicht alle unabhängig voneinander sind, sondern in der Regel eine starke Korrelation aufweisen.

Mit dem "Arbeitspunkt" oder "Betriebspunkt" ist derjenige Betriebszustand gemeint, bei dem die Komponente bzw. die Anlage momentan arbeitet. Jede mit der Komponente oder Anlage realisierbare Kombination von Zustandsgrössen entspricht einem Arbeitspunkt. Die Gesamtheit der möglichen Arbeitspunkte wird als Betriebsbereich bezeichnet. Üblicherweise ist der Arbeitspunkt der Komponente oder der Anlage vom Bedienpersonal vorgebbar, indem direkt beeinflussbare Zustandsgrössen auf den gewünschten Wert eingestellt werden. Läuft die Turbine beispielsweise im Teillastbetrieb, so arbeitet sie an einem anderen Arbeitspunkt als im Volllastbetrieb.

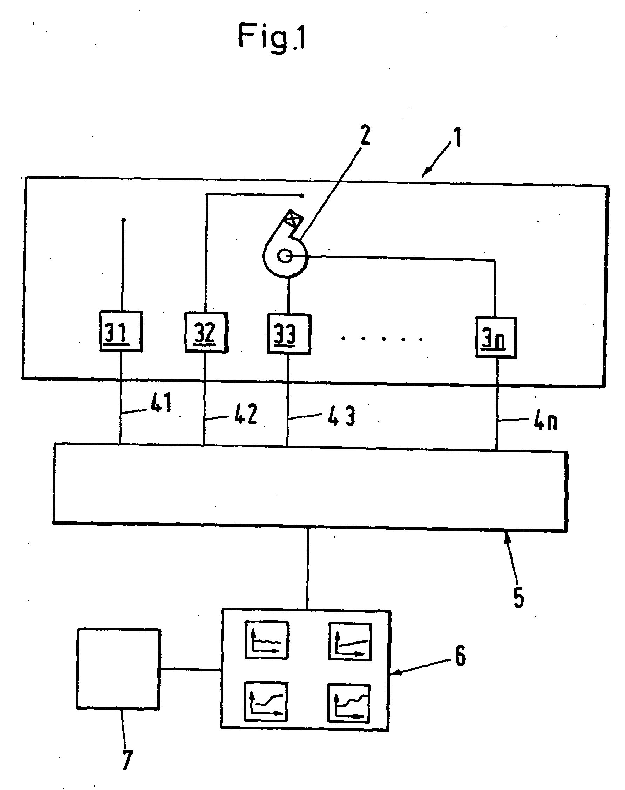

Fig. 1 zeigt eine schematische Blockdarstellung einer Anlage 1 zur Veranschaulichung eines Ausführungsbeispiels des erfindungsgemässen Verfahrens. Die zu überwachende Anlage 1 ist beispielsweise ein Wasserkraftwerk, das als hydromechanische Komponenten Turbinen 2 enthält. Da es für das Verständnis ausreicht, ist in Fig. 1 nur eine der Turbinen 2 symbolisch angedeutet. Natürlich sind üblicherweise mehr als eine Turbine 2 in der Anlage 1 vorgesehen. Ausserdem sind mehrere Sensoren 31,32,33,...,3n zur messtechnischen Erfassung von Zustandsgrössen $x_1,x_2,x_3,...,x_n$ vorgesehen. Dabei müssen nicht alle Zustandsgrössen unmittelbar an der Komponente 2 gemessen werden, sondern es können auch Zustandsgrössen an anderen Teilen der Anlage gemessen werden, wie beispielsweis der Druck des Wassers in der Druckleitung. Die Wahl der Zustandsgrössen $x_1,x_2,x_3,...,x_n$, die messtechnisch erfasst werden, richtet sich nach der Art der zu überwachenden Anlage bzw. Komponente. Es obliegt der Erfahrung des Fachmanns, für den jeweiligen Anwendungsfall die geeigneten Zustandsgrössen zu wählen.

Die Sensoren 31-3n übermitteln die von ihnen gemessen Daten über Signalleitungen 41,42,43,..., 4n, beispielsweise fieberoptische Leitungen, an eine Auswerte- und Speichervorrichtung 5, wo die Daten, gegebenenfalls nach einer Aufbereitung oder Weiterverarbeitung, als Messwerte gespeichert werden.

Die Zustandsgrössen $x_1, x_2, x_3, ..., x_n$ bilden einen Satz $X=(x_1, x_2, x_3, ..., x_n)$ von Zustandsgrössen. Während des Betriebs der Turbine 2 werden in vorgebbaren zeitlichen Abständen, beispielsweise jede Minute oder alle 10 Minuten, mittels der Sensoren 31-3n für den festgelegten Satz X von Zustandsgrössen jeweils Messwerte $x_{1t}, x_{2t}, x_{3t}, ..., x_{nt}$ erfasst und in der Auswerte- und Speichereinheit gespeichert. Der Messwert $x_{1t}$ bezeichnet den Wert, den die Zustandsgrösse $x_1$ zum Zeitpunkt t hat, oder allgemein: der Messwert $x_{it}$ mit i=1,2,3,...,n bezeichnet den Wert, den die Zustandsgrösse $x_i$ zum Zeitpunkt t hat. Dabei ist der Index t gleichbedeutend mit einem Laufindex, der die zeitlich aufeinanderfolgenden Messwerte indiziert.

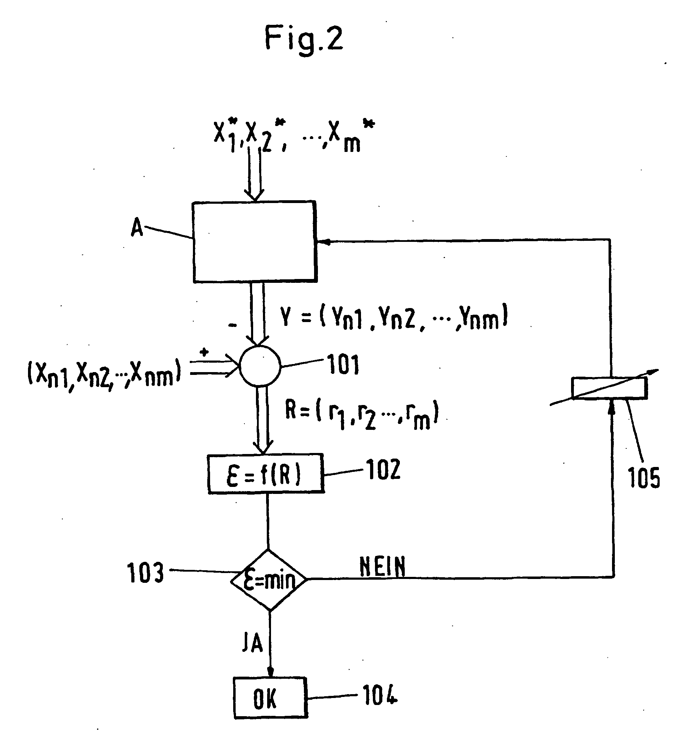

Mittels der Auswerte- und Speichereinheit 5 wird, wie weiter hinten erläutert, ein Modell A (Fig. 2) für das Betriebsverhalten der Komponente 2 erstellt und ausgewertet. Mit Hilfe des Modells A wird in vorgebbaren zeitlichen Abständen mindestens eine Überwachungsgrösse bestimmt, die unabhängig vom jeweils aktuellen Arbeitspunkt ist. Die Überwachungsgrösse, insbesondere ihr zeitlicher Verlauf wird mittels einer Ausgabeeinheit 6 graphisch dargestellt. Anhand des zeitlichen Verlaufs der Überwachungsgrösse lässt sich der Verschleiss beurteilen und es lassen sich Betriebsstörungen detektieren. Mit Verschleiss sind dabei betriebsbedingte, üblicherweise langsam fortschreitende Änderungen gemeint, beispielsweise im Wellenlager oder in der Wellendichtung der Turbine 2 sowie z. B.Ablagerungen in Leitungen oder Verschmutzungen von Filtern. Betriebsstörungen können beispielsweise Ausfälle oder Fehlfunktionen einer der Sensoren 31-3n oder der von ihnen überwachten Aktuatoren (z. B. Ventile, Steuerklappen) sein oder Störungen in der Anlage 1 bzw. der Komponente 2 wie beispielsweise Änderung von Vibrationen oder Überhitzung von Lagern oder Dichtungen.

Ferner ist bei dem in Fig. 1 illustrierten Ausführungsbeispiel eine Warnvorrichtung 7 zum Auslösen eines Alarms vorgesehen. Diese Warnvorrichtung wird aktiviert, falls die Überwachungsgrösse einen vorgebbaren Normalbereich verlässt. Der Alarm kann beispielsweise optisch und/oder akustisch erfolgen.

Im folgenden wird nun anhand des Flussschemas in Fig. 2 die Erstellung des Modells A für das Betriebsverhalten näher erläutert. Das Modell A ist ein Modell, welches direkt aus experimentellen Daten, das heisst aus den mittels der Sensoren 31-3n erfassten Messwerten $x_{it}$ für die Zustandsgrössen $x_i$ gewonnen wird. Für die Erstellung des Modells A werden diejenigen Messwerte $x_{it}$ verwendet, die während einer Modellierungsphase erfasst werden. Dabei bezeichnet die Modellierungsphase eine zeitlich begrenzte Betriebsperiode der Komponente 2 bzw. der Anlage 1, während der die Anlage 1 im normalen, das heisst störungsfreien Betrieb arbeitet. Die Wahl der Modellierungsphase kann aufgrund von Erfahrung erfolgen.

Beispielsweise wird nach der Inbetriebnahme der Anlage abgewartet, bis typische Einlaufvorgänge abgeschlossen sind. Die Modellierungsphase wird zeitlich so lang gewählt, dass sie mehrere verschiedene Arbeitspunkte aus dem Betriebsbereich der Komponente 2 umfasst. Während der Modellierungsphase werden Messwerte $x_{it}$ für die Zustandsgrössen $x_i$ gesammelt. Diese Messwerte $x_{it}$ beziehen sich mithin auf mehrere verschiedenen Arbeitspunkte. Da der zeitliche Abstand der Messwerterfassung, also die Zeit zwischen der Messung t und der Messung t+1 relativ kurz sein kann, ist es gegebenenfalls vorteilhaft, mehrere zeitlich aufeinanderfolgende Messwerte für eine Zustandsgrösse $x_i$ zeitlich zu mitteln, oder sonstwie mit bekannten statistischen Methoden zusammenzufassen, beispielsweise durch Bildung von Korrelationsmatrizen. Um dies zu verdeutlichen, wird im folgenden anstelle des Index t der Index T verwendet, um anzudeuten, dass der entsprechende Wert auch die Zusammenfassung von mehreren Einzelwerten darstellen kann. So werden z. B. die Messwerte künftig mit $x_{iT}$ bezeichnet.

Aus dem Satz von Zustandsgrössen X wird mindestens eine der Zustandsgrössen $x_i$ ausgewählt, für die mittels des Modells A ein Modellwert $y_i$ bestimmt wird. Als Eingangsvariablen des Modells A wird zumindest ein Teil des Satzes X der Zustandsgrössen $x_i$ verwendet. Der Einfachheit halber wird im folgenden beispielhaft der Fall erläutert, dass genau eine der Zustandsgrössen $x_i$ die Ausgangsgrösse des Modells A ist und die übrigen n-1 Zustandsgrössen die Eingangsvariablen des Modells. Es versteht sich jedoch, dass das Modell A in sinngemäss gleicher Weise auch so gestaltet werden kann, dass seine Ausgangsgrössen Modellwerte für mehr als eine der Zustandsgrössen $x_i$ umfassen. Prinzipiell ist es egal, welche der Zustandsgrössen $x_i$ als Eingangsvariablen gewählt werden und für welche der Zustandsgrössen $x_i$ Modellwerte bestimmt werden. Unter praktischen Aspekten ist es jedoch vorteilhaft, wenn die Eingangsvariablen solche Zustandsgrössen $x_i$ sind, die direkt vom Bedienpersonal beeinflussbar sind, z. B. der Durchfluss in der Turbinenzuleitung, und die Ausgangsgrössen solche Zustandsgrössen $x_i$, die nicht unmittelbar beeinflussbar sind, z. B. die Temperatur des Wellenlagers oder der Wellendichtung.

Ohne Beschränkung der Allgemeinheit ist in dem hier beschriebenen Ausführungsbeispiel die zu modellierende Zustandsgrösse diejenige mit dem Index n, das heisst die Ausgangsgrösse des Modells ist der Modellwert $y_n$ für die Zustandsgrösse $x_n$. Die übrigen Zustandsgrössen $x_i$ mit i=1,2,...,n-1 sind die Eingangsvariablen des Modells A.

Während der Modellierungsphase werden in der Auswerte-und Speichereinheit 5 insgesamt m Sätze $X_T$ (mit T=1,2,...,m) von Messwerten für den Satz von Zustandsgrössen $X=(x_1, x_2, ..., x_n)$ abgespeichert, wobei der Index T die zeitlich aufeinanderfolgenden Messwertsätze $X_T$ indiziert. Insgesamt liegen also für m Zeiten bzw. Zeitintervalle Messwerte vor. Jeder Satz von Messwerten $X_T=(x_{1T},x_{2T}, ... ,x_{nT})$ enthält also für jede Zustandsgrösse $x_i$ (mit i=1,2,...,n) jeweils den Messwert $x_{iT}$, den die Zustandsgrösse $x_i$ zur Zeit T hatte. Mit $X^*_T$ (siehe Fig. 2) werden die Messwertsätze $X_T$ bezeichnet, die den Messwert $x_{nT}$ für die Zustandsgrösse $x_n$ nicht mehr enthalten. Es ist also: $X^*_T=(x_{1T},x_{2T},....,x_{(n-1)T})$ mit T=1,2,...,m).

Als Modellstruktur für das Modell A wird im einfachsten Fall eine lineare statische Modellstruktur gewählt, die beispielsweise die folgende Form hat:

$$x_n = a_0 + \sum_{i=1}^{n-1} a_i \cdot x_i$$

wobei die Grössen $a_i$ mit i=0,1,2,...,n-1 Modellparameter sind.

Die m Sätze $X_T$ von Messwerten liefern m Bestimmungsgleichungen für die n Modellparameter $a_i$. Da in der Regel die Anzahl m der Sätze von Messwerten grösser ist als die Anzahl n der Modellparameter $a_i$, ist das System der Bestimmungsgleichungen überbestimmt. Es sind jedoch genügend mathematische Methoden bekannt, um mittels der Bestimmungsgleichungen möglichst gute Werte für die Modellparameter $a_i$ zu ermitteln. Beispielsweise geeignet sind Methoden der Ausgleichsrechnung, die Methode der kleinsten Quadrate, die Methode der Singularwertzerlegung (SVD) oder die Principal Component Analysis (PCA). Da solche Methoden hinlänglich bekannt sind, werden sie hier nicht näher erläutert.

Mittels des Modells A wird nun für jeden Satz von Messwerten $X^*_T$ der zugehörige Modellwert $y_{nT}$ gemäss der Beziehung

$$y_{nT} = a_0 + \sum_{i=1}^{n-1} a_i \cdot x_{iT} \qquad\qquad T=1,2,...,m$$

T=1,2,...,m

bestimmt. Die $y_{nT}$ bilden einen Satz von Modellwerten $Y=(y_{n1},y_{n2},..y_{nm})$, wobei $y_{nT}$ der Modellwert für die Zustandsgrösse $x_n$ für die Zeit T ist. Im Schritt 101 (siehe Fig. 2) werden die Modellwerte $y_{nT}$ mit den ihn entsprechenden tatsächlichen Messwerten $x_{nT}$ für die Zustandsgrösse $x_n$ verglichen und daraus jeweils ein Residuum $r_T$ mit T=1,2,...,m bestimmt, das ein Mass für die Abweichung des Modellwerts $y_{nT}$ vom tatsächlichen Messwert $x_{nT}$ ist. Beispielsweise sind die Residuen $r_T=x_{nT}-y_{nT}$ mit T=1,2,...,m die Differenzen aus den tatsächlichem Messwerten $x_{nT}$ und den Modellwerten $y_{nT}$. Aus der Gesamtheit $R=(r_1,r_2,...,r_m)$ der Residuen wird im Schritt 102 ein Modellfehler $\varepsilon$ bestimmt, der ein Mass für die Güte des Modells ist. Der Modellfehler $\varepsilon$ kann beispielsweise die normierte Summe der Quadrate der Residuen sein.

Im folgenden wird, wie dies die Schritte 102,103 und 105 in Fig. 2 zeigen, durch Bestimmen der Modellparameter $a_i$ (Schritt 105) und jeweiliges erneutes Bestimmen des Modellfehlers $\varepsilon$ (Schritt 102) das Modell A solange optimiert, bis der Modellfehler $\varepsilon$ minimal ist oder eine vorgegebene Grenze unterschreitet. Ist dies erreicht, so ist das Modell A genügend gut für die Überwachung (Schritt 104).

Je nach Art der verwendeten Modellstruktur und/oder der verwendeten Methode zur Bestimmung der Modellparameter $a_i$ kann die Erstellung und die Optimierung des Modells A in nur einem Schritt oder aber in mehreren Schritten erfolgen. So ist es beispielsweise möglich, insbesondere bei Modellstrukturen, die linear in den Modellparametern $a_i$ sind, die Modellparameter in einem Schritt so zu bestimmen, dass das Modell A bereits optimal ist. Mittels der Methode der kleinsten Quadrate oder der SVD-Methode kann beispielsweise das System der Bestimmungsgleichungen für die Modellparameter $a_i$ so gelöst werden, dass die resultiernden Werte für die Modellparameter $a_i$ bereits eine optimierte Lösung darstellen. Andererseits ist es auch möglich, dass die Erstellung des Modells A und seine Optimierung in mehreren sukzessiven Schritten erfolgen, also zunächst das Modell A erstellt wird, woraus sich Anfangswerte für die Modellparameter ergeben, und anschliessend in einem oder mehreren iterativen Schritten die Modellparameter solange optimiert werden, bis der Modellfehler minimal ist. Ein solches iteratives Vorgehen ist üblicherweise notwendig, wenn sich die Bestimmungsgleichungen für die Modellparameter nicht analytisch lösen lassen, z. B. wenn als Modellstruktur neuronale Netze verwendet werden.

Nachdem das Modell A anhand der in der Modellierungsphase erfassten Messwerte erstellt und optimiert ist, ist es möglich, für jede derjenigen Kombinationen von Werten der Zustandsgrössen $x_1,x_2,...,x_{n-1}$, die einem Arbeitspunkt aus dem Betriebsbereich der Komponente 2 bzw. der Anlage 1 entsprechen, einen Modellwert $y_n$ für die Zustandsgrösse $x_n$ zu bestimmen, der in sehr guter Näherung angibt, welchen Wert die Zustandsgrösse $x_n$ haben müsste, wenn die Komponente 2 bzw. die Anlage 1 im normalen also störungsfreien Betrieb arbeitet. Mit anderen Worten: Das Modell A berücksichtigt den momentanen Arbeitspunkt.

Zur Überwachung der Anlage wird beispielsweise wie folgt vorgegangen. In vorgebbaren zeitlichen Abständen, beispielsweise alle paar Minuten, wird von den Sensoren 31-3n ein Messwertsatz für die Zustandsgrössen $x_i$ mit i=1,2,...,n erfasst und an die Auswerte- und Speichereinheit 6 übermittelt. Hier wird entweder jeder Messwertsatz einzeln ausgewertet oder die Messwertsätze werden jeweils über eine Zeitdauer, z. B. einen Tag, gesammelt und dann gemittelt oder anders zusammengefasst. Beispielsweise können auch Korrelationen oder Kreuzkorrelationen bestimmt werden. Aus den Messwerten für die Zustandsgrössen $x_1, x_2,...,x_{n-1}$ wird dann mittels des Modells A der Modellwert $y_n$ bestimmt. Dieser wird von dem zugehörigen tatsächlichen Messwert für die Zustandsgrösse $x_n$ subtrahiert und das sich daraus ergebende Residuum r, also die Differenz aus dem jeweils aktuellen Messwert und dem ihm entsprechenden Modellwert $y_n$, wird als Überwachungsgrösse bestimmt. Weil das Modell A den jeweils aktuellen Arbeitspunkt berücksichtigt, ist die Überwachungsgrösse, nämlich das Residuum r, unabhängig vom jeweils aktuellen Arbeitspunkt.

Die Überwachungsgrösse wird an die Ausgabeeinheit 6 übermittelt, wo der zeitliche Verlauf der Überwachungsgrösse vorzugsweise graphisch, z. B. auf einem Monitor, dargestellt wird.

Solange die Komponente 2 bzw. die Anlage 1 im normalen, also störungsfreien, Betrieb arbeitet und kein Verschleiss auftritt, so ist die Überwachungsgrösse, unabhängig vom jeweils aktuellen Arbeitspunkt, zeitlich im wesentlichen konstant. Tritt eine Betriebsstörung auf, beispielsweise ein Ausfall eines Sensors oder eine Überhitzung, so hat dies zur Folge, dass der Modellwert, der ja den normalen Betrieb beschreibt, stärker vom tatsächlichen Messwert abweicht. Folglich ändert sich die Überwachungsgrösse, was in ihrer graphischen Darstellung sehr einfach erkennbar ist. Üblicherweise führt das Auftreten von Betriebsstörungen zu einer zeitlich rasch verlaufenden Änderung der Überwachungsgrösse.

Treten in der Anlage 1 bzw. der Komponente 2 langsam fortschreitende Veränderungen auf, wie sie beispielsweise durch Verschleiss verursacht werden, so macht sich dies durch eine vergleichsweise langsamere und kontinuierliche Änderung im zeitlichen Verlauf der Überwachungsgrösse bemerkbar.

Auch ist es möglich, für die Überwachungsgrösse Schwellenwerte vorzugeben, die den Normalbereich der Überwachungsgrösse begrenzen. Bei Überschreitung der Schwellenwerte wird durch Aktivierung der Warnvorrichtung 7 ein Alarm, z. B. ein optisches und/oder akustisches Signal, ausgelöst oder eine Warnung gegeben. Da die Überwachungsgrösse unabhängig vom jeweils aktuellen Arbeitspunkt ist, sind solche Schwellenwerte für die Überwachungsgrösse gleichbedeutend mit flexiblen, an den jeweiligen Arbeitspunkt angepassten Schwellenwerten für die Zustandsgrössen.

Vorzugsweise wird der Schwellenwert für die Überwachungsgrösse anhand der Schwankungen der für die Modellierungsphase bestimmten Residuen $R=(r_1, r_2,...,r_m)$ festgelegt, weil diese Schwankungen ein typisches Mass dafür repräsentieren, wie stark die Abweichung zwischen dem Modellwert und dem ihm entsprechenden Messwert im normalen Betrieb sind. Beispielsweise kann der Schwellenwert für die Überwachungsgrösse gleich oder etwas grösser als das grösste der Residuen $r_1, r_2,...r_m$ der Modellierungsphase gewählt werden.

Die Modellstruktur für das Modell A kann selbstverständlich auch eine andere als die beschriebene lineare statische sein. Beispielsweise kann die Modellstruktur eine nichtlineare sein, bei der z. B. Produkte der Zustandsgrössen eingehen. Auch ist es möglich eine lineare dynamische Modellstruktur z. B. der folgenden Form zu verwenden:

$$x_{nT} = a_0 + \sum_{i=1}^{n-1} a_i \cdot x_i + a_n \cdot x_{nT-1}$$

Bei dieser dynamischen Modellstruktur werden alle Zustandsgrössen $x_i$ als Eingangsvariablen verwendet, wobei in die Bestimmung des Modellwerts für die Zustandsgrösse $x_{nT}$ der Wert dieser Zustandsgrösse zu einem früheren Zeitpunkt, $x_{nT-1}$, eingeht. Aus praktischen Gründen wird vorzugsweise eine Modellstruktur verwendet, die linear in den Modellparametern $a_i$ ist, denn dann sind die Modellparameter $a_i$ normalerweise analytisch bestimmbar.

Es ist aber auch möglich, neuronale Netze als Modellstruktur zu verwenden.

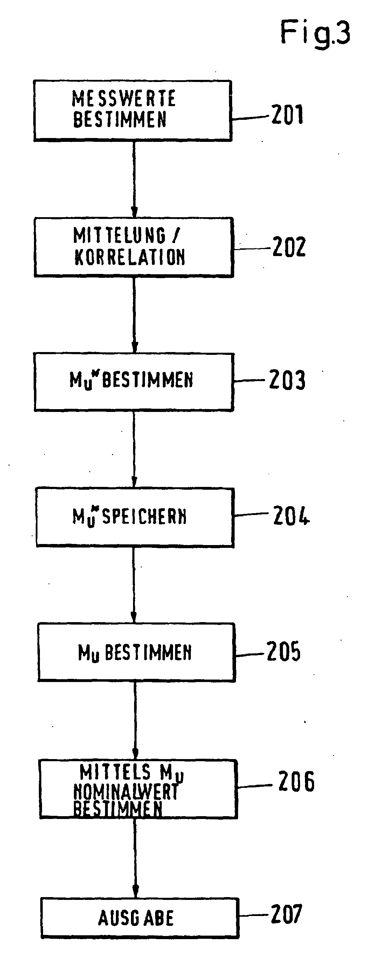

Im folgenden wird anhand des Flussschemas in Fig. 3 noch ein Ausführungsbeispiel des erfindungsgemässen Verfahrens erläutert, bei dem eine Aktualisierung des Modells erfolgt. Auch hier wird der Einfachheit halber mit beispielhaftem Charakter auf den Fall Bezug genommen, dass nur für eine der Zustandsgrössen $x_i$, nämlich die Zustandsgrösse $x_n$, Modellwerte berechnet werden. Es versteht sich jedoch, dass auch bei diesem Ausführungsbeispiel in sinngemäss gleicher Weise mehrere Zustandsgrössen $x_i$ modelliert werden können.

Um Verwechslungen mit der Modellierungsphase zu vermeiden, wird im folgenden der Index "u" verwendet, um die zeitliche Folge der bestimmten oder erfassten Grössen (Messwerte, Modellwerte, Modelle, Residuen) zu kennzeichnen. So bezeichnet z. B. $x_{iu}$ den Messwert, der zu einer bestimmten, durch "u" bezeichneten Zeit für die Zustandsgrösse $x_i$ erfasst wird und $x_{iu+1}$ den Messwert der für die gleiche Zustandsgrösse $x_i$ bei der nächsten Messung erfasst wird. Wie bereits vorne erwähnt, können die Messwerte, die beispielsweise alle paar Minuten erfasst werden, zunächst über eine vorgebbare zeitliche Periode, z. B. einen Tag, gesammelt und dann gemittelt und/oder anders, z. B. durch Bildung von Kreuzkorrelationen zusammengefasst werden, bevor die weiteren Verfahrensschritte erfolgen. Für solche Fälle bezeichnet $x_{iu}$ den über diese durch u bezeichnete Periode gemittelten oder zusammengefassten Messwert. Das heisst, es wird im folgenden nicht unterschieden, ob jeder erfasste Messwertsatz einzeln ausgewertet wird, oder ob eine zeitliche Mittelung über mehrere Messwertsätze erfolgt. Dieser Unterschied ist für das Verständnis unwesentlich.

Bei dem in Fig. 3 illustrierten Ausführungsbeispiel wird, analog wie vorne erklärt, zunächst das Modell A anhand der in der Modellierungsphase erfassten Messwerte erstellt und optimiert. Die folgenden Erläuterungen beziehen sich deshalb nur auf den Betrieb der Anlage 1 nach der Modellierungsphase. Auch hier wird in vorgebbaren zeitlichen Abständen jeweils ein Satz von Messwerten $x_{1u},x_{2u},...,x_{nu}$ für den Satz von Zustandsgrössen $x_1,x_2,...,x_n$ erfasst (Schritt 201).

Während des Betriebs der Anlage 1 wird das Modell A in vorgebbaren zeitlichen Abständen mittels der Auswerte-und Speichervorrichtung 5 aktualisiert, das heisst es wird, wie weiter hinten noch erläutert, jeweils ein aktuelles Modell $M_u$ bestimmt (Schritt 205). Mittels des jeweils aktuellen Modells $M_u$ wird für mindestens einen fixierten Referenzarbeitspunkt jeweils ein Nominalwert $s_{nu}$ für die Zustandsgrösse $x_n$ bestimmt (Schritt 206), der als Überwachungsgrösse dient und an die Ausgabeeinheit 6 übermittelt wird (Schritt 207). Das heisst, im Unterschied zu dem weiter vorne beschriebenen Ausführungsbeispiel wird zur Bestimmung der Überwachungsgrösse das jeweils aktuelle Modell $M_u$ immer an dem gleichen Referenzarbeitspunkt ausgewertet, unabhängig davon, an welchem Arbeitspunkt die Anlage 1 bzw. die Komponente 2 momentan arbeitet. Dieser fixierte Referenzarbeitspunkt, der durch feste Werte für die Zustandsgrössen $x_i$ definiert ist, wird vorzugsweise so gewählt, dass er etwa mitten im Betriebsbereich der Anlage.1 bzw. der Komponente 2 liegt,z. B. am Bestpunkt, oder in der Nähe eines Arbeitspunkts, an dem die Anlage 1 bzw. die Komponente 2 häufig arbeitet bzw. betrieben wird.

Die Bestimmung und Optimierung des jeweils aktuellen Modells $M_u$ kann beispielsweise in sinngemäss gleicher Weise erfolgen, wie dies vorne anhand der Erstellung des Modells A aus den Messwerten $x_{iT}$ der Modellierungsphase beschrieben ist (siehe Fig. 1). Das heisst die Aktualisierung ist eine neue Bestimmung des Modells anhand des Satzes von Messwerten $x_{1u},x_{2u},...x_{nu}$. Mittels der Messwerte $x_{1u}, x_{2u},...,x_{(n-1)u}$ wird mit Hilfe des letzten aktuellen Modells $M_{u-1}$ oder mit Hilfe des neu bestimmten Modells der Modellwert $y_{nu}$ für die Zustandsgrösse $x_n$ bestimmt. Dann wird das Residuum $r_{nu}=x_{nu}-y_{nu}$ gebildet, das die Differenz aus dem tatsächlichen Messwert $x_{nu}$ und dem Modellwert $y_{nu}$ ist. Im folgenden wird dieses Residuum $r_{nu}$ minimiert, bzw. falls mehrere Residuen bestimmt werden, wird ein aus den Residuen bestimmbarer Modellfehler, z. B. die normierte Summe der Quadrate der Residuen, minimiert. Auch hier kann, wie vorne beschrieben, die Erstellung und Optimierung des aktuellen Modells $M_u$ gegebenenfalls in einem Schritt erfolgen. Bevor das letzte aktuelle Modell $N_{u-1}$ verändert wird bzw. das Modell neu berechnet wird, werden die zugehörigen Modellparameter des Modells $M_{u-1}$ sowie eine Kenngrösse, welche repräsentativ für die Güte dieses Modells $M_{u-1}$ ist, beispielsweise Korrelationsmatrizen und/oder geschätzte Varianzen des Messrauschens gespeichert.

Vorzugsweise werden bei der Aktualisierung zur Bestimmung des aktuellen Modells $M_u$ die älteren Modelle, deren Modellparameter und Modellunsicherheiten bzw. Güten gespeichert sind, insbesondere in gewichteter Weise, berücksichtigt. Eine bevorzugte Realisierung dieses Einbeziehens älterer Modelle wird im folgenden anhand des Flussschemas in Fig. 3 erläutert.

Nachdem im Schritt 201 die Messwerte $x_{1u},x_{2u},...,x_{nu}$ bestimmt wurden und gegebenenfalls durch Mittelung und/oder Bildung von Kreuzkorrelationen zusammengefasst sind (Schritt 202), wird im Schritt 203 ein Modell $M_u^*$ erstellt und optimiert (z. B. analog wie vorne beschrieben), welches Modell $M_u^*$ nur auf denjenigen Messwerten $x_{1u},x_{2u},...,x_{nu}$ basiert, die seit der letzten Aktualisierung erfasst wurden. Das Symbol "*" soll also anzeigen, dass zur Erstellung dieses Modells $M_u^*$ nur die Messwerte $x_{1u},x_{2u},...,x_{nu}$ verwendet werden, die in der durch u indizierten Zeitspanne bestimmt wurden. Analog bezeichnet $M_{u-1}^*$ das Modell, zu dessen Erstellung die in der durch (u-1) indizierten Zeitspanne erfassten Messwerte $x_{1(u-1)},x_{2(u-1)},...,x_{n(u-1)}$ verwendet werden, usw.

Im Schritt 204 wird das Modell $M_u^*$ zusammen mit Kenngrössen, welche repräsentativ für seinme Güte sind, beispielsweise Korrelationsmatrizen und/oder geschätzte Varianzen des Messrauschens, in der Auswerte- und Speichervorrichtung 5 (Fig. 1) gespeichert.

Im Schritt 205 wird dann das aktuelle Modell $M_u$ bestimmt, welches die älteren Modelle $M_{u-1}^*$, $M_{u-2}^*$, ... berücksichtigt, bestimmt, beispielsweise als Summe der Form:.

$$M_u \; = \; M_u{}^* \; + \; \lambda \; M_{u-1}{}^* \; + \; \lambda^2 \; M_{u-2}{}^* \; + \; ...$$

wobei $\lambda$ einen Gewichtsfaktor bzw. einen Vergessensfaktor bezeichnet. Der Gewichts- oder Vergessensfaktor $\lambda$ kann beispielsweise aus den Kenngrössen, die jeweils zusammen mit den Modellen $M_{u-1}^*$, $M_{u-2}^*$,... gespeichert sind, bestimmt werden. Ein Vorteil dieser Bestimmung des aktuellen Modells $M_u$ ist darin zu sehen, dass die Erinnerungstiefe des aktuellen Modells, also der Einfluss der Historie auf das jeweils aktuelle Modell $M_u$, über den Faktor $\lambda$ beeinflussbar und variierbar ist. So kann beispielsweise auch im Nachhinein noch das zu jedem Zeitpunkt jeweils aktuelle Modell $M_u$, $M_{u-1}$, $M_{u-2}$,...variiert werden, was eine enorme Flexibilität bedeutet, die insbesondere bei der restrospektiven Analyse der zeitlichen Entwicklung von Betriebsstörungen besonders vorteilhaft ist.

Nachdem das aktuelle Modell $M_u$ bestimmt und optimiert ist, wird es an dem Referenzarbeitspunkt ausgewertet (Schritt 206) und somit der Nominalwert $s_{nu}$ als Überwachungsgrösse bestimmt und an die Ausgabeeinheit 6(Fig.1) übermittelt.

Alternativ ist es auch möglich, das jeweils aktuelle Modell $M_u$ in der folgenden Form zu bestimmen:

$$M_u = M_u* + \lambda\, M_{u-1}$$

Auch bei dieser Form berücksichtigt das jeweils aktuelle Modell $M_u$ die älteren Modelle - also die Historie -, denn in die Bestimmung des Modells $M_{u-1}$ gingen dann die Modelle $N_{u-1}*$ und $M_{u-2}$ ein, wobei in $M_{u-2}$ die Modelle $M_{u-2}*$ und $M_{u-3}$ eingingen, usw. Diese Variante hat den Vorteil besonders wenig Speicherplatz zu benötigen, weil die gesamte Historie (zeitliche Entwicklung) immer nur durch ein Modell beschrieben wird.

Es versteht sich, dass zur Berücksichtigung der Historie auch andere Varianten als das hier beschriebene exponentielle Vergessen geeignet sind.Die Aktualisierung zur Bestimmung des jeweils aktuellen Modells $M_u$ erfolgt regelmässig in vorgebbaren zeitlichen Abständen, beispielsweise einmal am Tag. Natürlich ist es auch möglich die Aktualisierung quasi-kontinuierlich durchzuführen, das heisst nach jeder einzelnen Bestimmung des Satzes von Messwerten für die Zustandsgrössen $x_i$.

Bei diesem Ausführungsbeispiel ist die Überwachungsgrösse nicht eine Differenz aus Messwert und Modellwert, sondern der Nominalwert $s_{nu}$. Dieser ist der Modellwert, der sich für den fixierten Refernzarbeitspunkt aus dem jeweils aktuellen Modell $M_u$ ergibt. Folglich ist auch bei dieser Verfahrensführung die Überwachungsgrösse $s_{nu}$ unabhängig vom momentanen Arbeitspunkt. Sie bezieht sich stets auf den fixierten Referenzarbeitspunkt. Anders ausgedrückt gibt die Überwachungsgrösse $s_{nu}$ an, welchen Wert die Zustandsgrösse $x_n$ haben würde, wenn die Anlage 1 bzw. die Komponente 2 an dem Referenzarbeitspunkt arbeiten würde. Es ist offensichtlich, dass die Überwachungsgrösse $s_{nu}$ zeitlich im wesentlichen konstant ist, solange die Anlage 1 bzw. die Komponente 2 im normalen Betrieb arbeitet.

Die Aktualisierung des Modells erfolgt unabhängig davon, ob eine Betriebsstörung aufgetreten ist oder nicht. Tritt eine Änderung (Störung, Sensorausfall, Verschleiss) in der zu überwachenden Anlage 1. bzw. Komponente 2 auf, so wird diese Änderung bei der Aktualisierung in das aktuelle Modell $M_u$ eingearbeitet. Folglich repräsentiert das aktuelle Modell $M_u$ dann auch nicht mehr den normalen Betrieb, sondern den durch Störung und/oder Verschleiss geänderten Betrieb. Wird das aktueulle Modell nun an dem Refernzarbeitspunkt ausgewertet, so ergibt sich ein Nominalwert $s_{nu}$, der von dem des normalen Betriebs abweicht. Mithin zeigt sich in der graphischen Darstellung der Überwachungsgrösse als Funktion der Zeit eine Abweichung von dem konstanten Verhalten. Auch hier haben Betriebsstörungen in der Regel eine zeitlich relativ rasch verlaufenden Änderung der Überwachungsgrösse zur Folge, während langsam fortschreitende Änderungen, wie sie beispielsweise durch Verschleiss verursacht werden, eine vergleichsweise langsamere und kontinuierliche Änderung im zeitlichen Verlauf der Überwachungsgrösse $s_{nu}$ bewirken.

Ein besonderer Vorteil dieser Art der Überwachung, die auf einen fixierten Referenzarbeitspunkt bezogen ist, liegt darin, dass es auch möglich ist, Trends für den weiteren Betrieb der Komponenten 2 bzw. der Anlage 1 zu erkennen bzw. zu bestimmen. Dies wird am Beispiel des Verschleissens einer Dichtung erläutert. Wenn die Dichtung kontinuierlich verschleisst, so führt dies beispielsweise zu einem kontinuierlichen Anwachsen im zeitlichen Verlauf der Überwachungsgrösse. Da sich die Überwachungsgrösse stets auf denselben Referenzarbeitspunkt bezieht, lässt sich somit voraussagen, wielange die Dichtung noch funktionstüchtig ist. Dadurch lassen sich Wartungsarbeiten wesentlich besser und effizienter planen und es kommt deutlich seltener zu überraschenden unwirtschaftlichen Betriebsausfällen. Auch deshalb lassen sich durch das erfindungsgemässe Verfahren die Instandhaltungs- und Betriebskosten von Anlagen für industrielle Anwendungen erheblich senken.

Natürlich können für den fixierten Referenzarbeitspunkt jeweils mehrere Nominalwerte für unterschiedliche Zustandsgrössen bestimmt werden. Auch ist es möglich, mehrere Referenzarbeitspunkte zu fixieren, an denen jeweils das aktuelle Modell $M_u$ ausgewertet wird.

Bei einer bevorzugten Weiterbildung des erfindungsgemässen Verfahrens wird ausser der Detektion von Abweichungen vom normalen Betriebsverhalten auch eine Fehlerisolierung durchgeführt, das heisst der aufgetreten Fehler wird möglichst gut lokalisiert. Ziel dieser Fehlerisolierung ist es, diejenige Zustandsgrösse bzw. denjenigen Sensor 31-3n möglichst genau zu lokalisieren, der dafür verantwortlich ist, dass die Abweichung vom normalen Betriebsverhalten aufgetreten ist. Dient beispielsweise eine Lagertemperatur als Überwachungsgrösse, so kann eine Abnormalität z. B. einerseits durch eine Fehlfunktion des zugehörigen Sensors verursacht werden, andererseits aber auch durch eine Betriebsstörung in einem anderen Bereich der Komponente bzw. der Anlage, z. B. durch eine unzulässige Erhöhung der Durchflussmenge oder durch eine Fehlfunktion des Sensors, der die Durchflussmenge erfasst.

Die Fehlerisolierung wird vorzugsweise wie folgt durchgeführt:

Anhand der erfassten Messwerte für die Zustandsgrössen und/oder eines Gesamtmodells werden mehrere Teilmodelle erstellt, die jeweils eine kleinere Modelldimension als n-1 aufweisen, wobei n die Anzahl der erfassten Zustandsgrössen $x_i$ ist. Mittels der Teilmodelle werden rekonstruierte Werte für zumindest einen Teil der Zustandsgrössen ermittelt und durch jeweiliges Vergleichen der rekonstruierten Werte mit den ihnen entsprechenden Messwerten für die Zustandsgrössen wird für jedes Teilmodell ein Rekonstruktionsfehler ermittelt. Durch Vergleichen der Rekonstruktionsfehler mit vorgebbaren Schwellenwerten wird mindestens eine fehlerbehaftete Zustandsgrösse isoliert.

Diese Isolierung soll im folgenden anhand eines sehr einfachen Beispiels verdeutlicht werden. Bei diesem Beispiel werden n=4 Zustandsgrössen $x_1, x_2, x_3, x_4$ messtechnisch erfasst und wie vorne beschrieben das Modell.A für das Betriebsverhalten bzw. das aktuelle Modell $M_u$ bestimmt. Es wird eine lineare Modellstruktur gewählt, beispielsweise

$$x_4 = a_0 + a_1 x_1 + a_2 x_2 + a_3 x_3$$

Mathematisch ausgedrückt beschreibt diese Gleichung eine dreidimensionale Hyperfläche in einem vierdimensionalen Raum. Da es für das folgende nicht mehr notwendig ist zwischen den Eingangsvariablen und den Ausgangsgrössen des Modells zu unterscheiden kann diese Gleichung auch in der Form

$$M(x_1, x_2, x_3, x_4) = 0$$

dargestellt werden, wobei M eine Funktion der vier Zustandsgrössen $x_1, x_2, x_3, x_4$ ist, welche das Modell bzw. das aktuelle Modell repräsentiert. Die Modelldimension, welche der Dimension derjenigen Hyperfläche entspricht, die durch das Modell für das Betriebsverhalten im n-dimensionalen Raum der n Zustandsgrössen aufgespannt wird, ist in diesem Beispiel drei.

Wird nun anhand der Überwachungsgrösse festgestellt, dass eine Betriebsstörung auftritt, so wird diese anhand von Teilmodellen lokalisiert. Ein solches Teilmodell zeichnet sich dadurch aus, dass seine Modelldimension um mindestens eins niedriger ist als die Modelldimension des Modells A bzw des aktuellen Modells $M_u$. In dem hier erläuterten Beispiel werden zweidimensionale Teilmodelle verwendet, das heisst die Modelldimension der Teilmodelle ist zwei. Es lassen sich die folgenden Teilmodelle bestimmen:

m1($x_1, x_2, x_3$); m2($x_1, x_2, x_4$); m3($x_1, x_3, x_4$); m4($x_2, x_3, x_4$)

Das Teilmodell m1 hat beispielsweise die Form:

$$x_1 = b0 + b_1 x_2 + b_2 x_3 ,$$

wobei $b_0, b_1$ und $b_2$ Modellparameter bezeichnen. Die Zustandsgrösse $x_4$ geht in das Teilmodell m1 nicht mehr ein. In analoger Weise geht die Zustandsgrösse $x_3$ in das Teilmodell m2 nicht mehr ein, die Zustandsgrösse $x_2$ geht in das Teilmodell m3 nicht mehr ein, und die Zustandsgrösse $x_1$ geht in das Teilmodell m4 nicht mehr ein.

Wie bereits erwähnt, ist es für die Teilmodelle m1-m4 unerheblich, welche der Zustandsgrössen $x_i$ als Eingangsvariablen dienen und welche als Ausgangsgrössen. So ist es beispielsweise mit dem Teilmodell m1 möglich, die Zustandsgrösse $x_1$ aus den Zustandsgrössen $x_2$ und $x_3$ zu berechnen, oder die Zustandsgrösse $x_2$ aus den Zustandsgrössen $x_1$ und $x_3$ zu berechnen, oder die Zustandsgrösse $x_3$ aus den Zustandsgrössen $x_1$ und $x_2$ zu berechnen. Analoges gilt für die Teilmodelle m2, m3 und m4.

Mittels der Teilmodelle m1-m4 werden nun für die Zustandsgrössen $x_1, x_2, x_3, x_4$ Werte bestimmt, die als rekonstruierte Werte bezeichnet werden. Durch jeweiliges Vergleichen der rekonstruierten Werte mit den ihnen entsprechenden Messwerten $x_{iT}$ bzw. $x_{iu}$ für die Zustandsgrössen $x_i$ wird für jedes der Teilmodelle m1-m4 ein Rekonstruktionsfehler bestimmt, der repräsentativ dafür ist, wie gut die mittels des zugehörigen Teilmodells bestimmten rekonstruierten Werte mit den Messwerten übereinstimmen. Ist der Rekonstruktionsfehler grösser als ein vorgebbarer Schwellenwert, so wird das zugehörige Teilmodell als fehlerhaft beurteilt, anderenfalls als nicht fehlerhaft. Die Schwellenwerte für die Rekonstruktionsfehler lassen sich beispielsweise anhand der Residuen, die z. B. in der Modellierungsphase bestimmt wurden, festlegen.

Somit werden die Teilmodelle in zwei Klassen eingeteilt: in fehlerhafte und in nicht fehlerhafte. Anhand der Kombinationen von Zustandsgrössen $x_i$ die zu fehlerhaften Teilmodellen führen, und der Kombinationen von Zustandsgrössen $x_i$, die zu nicht fehlerhaften Teilmodellen führen, lässt sich dann die fehlerbehaftete Zustandsgrösse isolieren.

Dies sei am erwähnten einfachen Beispiel mit vier Zustandsgrössen erläutert. Ist z. B. die Zustandsgrösse $x_1$ fehlerbehaftet, weil beispielsweise der Sensor 31 nicht korrekt arbeitet, so führt dies im allgemeinen dazu, dass alle die Teilmodelle, in denen $x_1$ vorkommt, also die Teilmodelle m1,m2 und m3, als fehlerhaft beurteilt werden, weil ihr Rekonstruktionsfehler zu gross ist. Dagegen wird das Teilmodell m4 den kleinsten Rekonstruktionsfehler aufweisen und als nicht fehlerbehaftet beurteilt, weil die Zustandsgrösse $x_1$ in dieses Teilmodell m4 nicht eingeht.

Analog führt eine Fehlerbehaftung der Zustandsgrösse $x_2$ bzw. des Sensors 32 dazu, dass nur das Teilmodell, in welches $x_2$ nicht eingeht, nämlich m3, als nicht fehlerhaft beurteilt wird.

Eine Fehlerbehaftung der Zustandsgrösse $x_3$ bzw. des Sensors 33 führt dazu, dass nur das Teilmodell m2 als nicht fehlerbehaftet beurteilt wird, und eine Fehlerbehaftung der Zustandsgrösse $x_4$ bzw. des Sensors 34 führt dazu, dass nur das Teilmodell m1 nicht fehlerhaft ist.

Auf diese Weise lässt sich anhand der Teilmodelle m1-m4 der Fehler lokalisieren, genauer gesagt, die fehlerhafte Zustandsgrösse bzw. der fehlerhafte Sensor kann isoliert werden.

Das hier beschriebenen Vorgehen zur Fehlerisolierung lässt sich in einfacher Weise auf allgemein n Zustandsgrössen $x_i$ mit i=1,2,...,n ausdehnen. Bei n Zustandsgrössen $x_i$ ist die maximale Modelldimension des Modells für das Betriebsverhalten n-1, das heisst das Modell für das Betriebsverhalten bestimmt in dem n-dimensionalen Raum der n Zustandsgrössen eine n-1-dimensionale Hyperfläche. Die für die Fehlerisolierung benötigten Teilmodelle haben jeweils eine Modelldimension d, die kleiner ist als die Modelldimension n-1 des Modells für das Betriebsverhalten, das heisst d < n-1. Folglich repräsentiert jedes Teilmodell eine d-dimensionale Hyperfläche in einen (d+1)-dimensionalen Raum. Da die n Zustandsgrössen $x_i$ im allgemeinen stark korreliert, also nicht unabhängig voneinander sind, ist das Modell A bzw. $M_u$ für das Betriebsverhalten analytisch redundant. Aufgrund dieser analytischen Redundanz lassen sich durch die Teilmodelle die Fehler isolieren.

Die Anzahl der fehlerhaften Zustandsgrössen bzw. der fehlerhaft arbeitenden Sensoren, die sich mittels der Teilmodelle isolieren lassen, ist gleich der Differenz aus der Modelldimension des Modells für das Betriebsverhalten und der Modelldimension der einzelnen Teilmodelle. Für praktische Anwendungeen ist es häufig ausreichend, wenn diese Differenz eins beträgt.

Es versteht sich, dass für die Teilmodelle auch anderer Modellstrukturen als die hier beispielhaft erwähnte lineare Modellstruktur verwendet werden können. Die vornestehenden Erläuterungen bezüglich der Modellstruktur des Modells für das Betriebsverhalten gelten sinngemäss auch für die Teilmodelle.

Die Erstellung der einzelnen Teilmodelle kann beispielsweise in sinngemäss gleicher Weise erfolgen wie die Erstellung des Modells für das Betriebsverhalten, also direkt aus den Messwerten für die Zustandsgrössen. Alternativ ist aber auch das folgende Vorgehen möglich. Zunächst wird, beispielsweise mittels der SVD-Methode, ein Gesamtmodell erstellt, dessen Modelldimension gleich der Modelldimension d der zu bestimmenden Teilmodelle ist, wobei jedoch alle Zustandsgrössen $x_i$ mit i=1,2,...,n in dieses Gesamtmodell eingehen. Dieses Gesamtmodell ist folglich analytisch redundant. Anschliessend werden durch jeweiliges Eliminieren mindestens einer der Zustandsgrössen $x_i$ aus dem Gesamtmodell die einzelnen Teilmodelle bestimmt, das heisst, das Gesamtmodell wird jeweils auf einen Raum niedrigerer Dimension projiziert. Die hierfür benötigten mathematischen Methoden zur Projektion sind an sich bekannt und werden hier nicht näher erläutert.

Die Bestimmung einer geeigneten Modelldimension d für die Teilmodelle bzw. für das Gesamtmodell kann beispielsweise mittels der SVD-Methode erfolgen.

Die Bestimmung, Speicherung und Auswertung der Teilmodelle erfolgt vorzugsweise in der Auswerte- und Speichervorrichtung 5.

**Patentansprüche**

1. Verfahren zum Überwachen von Anlagen mit mechanischen, insbesondere hydromechanischen, Komponenten, die an variablen Arbeitspunkten betreibbar sind, mit den folgenden Schritten:

   a) während des Betriebs der Komponenten (2) werden in vorgebbaren zeitlichen Abständen für einen festgelegten Satz von Zustandsgrössen ($x_i$) jeweils Messwerte ($x_{iT}$;$x_{iu}$) erfasst,
   b) die während einer vorgeschalteten Modellierungsphase, bei der die Anlage im störungsfreien Betrieb arbeitet, für verschiedenen Arbeitspunkte erfassten Messwerte ($x_{iT}$) werden zur Erstellung eines Modells (A) für das Betriebsverhalten der Komponenten (2) herangezogen, wobei

      i) die Eingangsvariablen des Modells (A) zumindest ein Teil des Satzes der Zustandsgrössen ($x_i$) sind und

die Ausgangsgrössen einen Modellwert ($y_{nT}$) für mindestens eine der Zustandsgrössen ($x_n$) umfassen,

ii) durch Vergleichen des jeweiligen Modellwerts ($y_{nT}$), mit dem ihm entsprechenden tatsächlichen Messwert ($x_{nT}$) der Modellierungsphase jeweils ein Residuum ($r_T$) bestimmt wird,

iii) das Modell (A) durch Bestimmen von Modellparametern so optimiert wird, dass ein aus den Residuen ($r_T$) bestimmbarer Modellfehler ($\varepsilon$) minimal wird,

c) mit Hilfe des Modells (A) für das Betriebsverhalten wird in vorgebbaren zeitlichen Abständen mindestens eine Überwachungsgrösse ($r;S_{nu}$) bestimmt, die unabhängig vom jeweils aktuellen Arbeitspunkt ist,

d) der zeitliche Verlauf der Überwachungsgrösse ($r;s_{nu}$) wird zur Beurteilung des Verschleisses in den Komponenten (2) und/oder zur Detektion von Betriebsstörungen herangezogen.

2. Verfahren nach Anspruch 1, wobei die erfassten Messwerte ($x_{iT},x_{iu}$) in einer Auswerte- und Speichervorrichtung (5) gespeichert werden, wobei die Erstellung und die Auswertung des Modells (A) in der Auswerte- und Speichervorrichtung (5) erfolgt, und wobei ein Warnvorrichtung (7) zum Auslösen eines Alarms aktiviert wird, falls die Überwachungsgrösse ($r;s_{nu}$) einen vorgebbaren Normalbereich verlässt.

3. Verfahren nach einem der vorangehenden Ansprüche, wobei die Überwachungsgrösse (r) die Differenz aus dem jeweils aktuellen Messwert ($x_n$) und dem ihm entsprechenden Modellwert ($y_n$) ist.

4. Verfahren nach einem der vorangehenden Ansprüche, wobei mittels der Auswerte- und Speichervorrichtung (5) in vorgebbaren zeitlichen Abständen eine Aktualisierung zur Bestimmung eines aktuellen Modells ($M_u$) erfolgt, bei welcher die seit der letzten Aktualisierung des Modells erfassten Messwerte ($x_{iu}$) berücksichtigt werden.

5. Verfahren nach Anspruch 4, wobei die zu unterschiedlichen Zeiten bestimmten Modelle ($M_u,M_{u-1},M_{u-2}$) jeweils zusammen mit Kenngrössen, welche repräsentativ für die Güte des jeweiligen Modells sind, in der Auswerte-und Speichervorrichtung (5) gespeichert werden.

6. Verfahren nach Anspruch 5, wobei bei der Aktualisierung zur Bestimmung des aktuellen Modells ($M_u$) die älteren Modelle ($M_{u-1}; M_{u-1}{}^*,M_{u-2}{}^*$), insbesondere in gewichteter Weise, berücksichtigt werden.

7. Verfahren nach einem der Ansprüche 4-6, wobei das jeweils aktuelle Modell ($M_u$) mittels der Auswerte- und Speichervorrichtung (5) optimiert wird, indem

a) für die seit der letzten Aktualisierung des Modells erfassten Messwerte ($x_{iu}$) durch Vergleichen mit den ihnen entsprechenden Modellwerten jeweils ein Residuum für die zugehörige Zustandsgrösse ($x_i$) berechnet wird,

b) die Modellparameter so bestimmt werden, dass der aus den Residuen bestimmbare Modellfehler minimal wird.

8. Verfahren nach einem der Ansprüche 4-7, wobei

a) mindestens ein Referenzarbeitspunkt fixiert wird,

b) von der Auswerte- und Speichervorrichtung (5) nach jeder Aktualisierung des Modells für den fixierten Referenzarbeitspunkt mittels des jeweils aktuellen Modells ($M_u$) der zugehörige Modellwert als Nominalwert ($s_{nu}$) für die entsprechende Zustandsgrösse ($x_n$) bestimmt wird,

c) der zeitliche Verlauf des Nominalwerts ($s_{nu}$) zur Beurteilung des Verschleisses in den Komponenten (2) und/oder zur Detektion von Betriebsstörungen herangezogen wird.

9. Verfahren nach Anspruch 8, wobei für den fixierten Referenzarbeitspunkt jeweils mehrere Nominalwerte für unterschiedliche Zustandsgrössen ($x_i$) bestimmt werden.

10. Verfahren nach einem der vorangehenden Ansprüche, wobei bei einer Abweichung vom normalen Betriebsverhalten eine Fehlerisolierung durchgeführt wird, indem

a) anhand der erfassten Messwerte für die Zustandsgrössen und/oder eines Gesamtmodells mehrere Teilmodelle (m1,m2,m3,m4) erstellt werden, die jeweils eine kleinere Modelldimension (d) als n-1 aufweisen, wobei n die Anzahl der erfassten Zustandsgrössen ($x_i$) ist;

b) mittels der Teilmodelle (m1,m2,m3,m4) rekonstruierte Werte für zumindest einen Teil der Zustandsgrössen ($x_i$) ermittelt werden;

c) durch jeweiliges Vergleichen der rekonstruierten Werte mit den ihnen entsprechenden Messwerten für die

Zustandsgrössen ($x_i$) für jedes Teilmodell (m1,m2,m3,m4) ein Rekonstruktionsfehler ermittelt wird;

d) durch Vergleichen der Rekonstruktionsfehler mit vorgebbaren Schwellenwerten mindestens eine fehlerbehaftete Zustandsgrösse isoliert wird.

**11.** Verfahren nach Anspruch 10, wobei die Teilmodelle (m1,m2,m3,m4), deren Rekonstruktionsfehler grösser als der vorgebbare Schwellenwert ist, als fehlerhaft beurteilt werden und wobei anhand der Kombinationen von Zustandsgrössen ($x_i$), die zu fehlerhaften Teilmodellen führen, und der Kombinationen von Zustandsgrössen ($x_i$), die zu nicht fehlerhaften Teilmodellen führen, die fehlerbehaftete Zustandsgrösse oder die fehlerbehafteten Zustandsgrössen isoliert wird/werden.

**Claims**

**1.** A method for monitoring plants with mechanical, in particular hydromechanical, components which can be operated at variable working points, including the following steps:

a) during the operation of the components (2) measured values ($x_{iT}$; $x_{iu}$) are determined in each case at predeterminable time intervals for a fixed set of state parameters ($x_i$),

b) the measured values ($x_{iT}$), which are determined for various working points during a modelling phase which is carried out beforehand and in which the plant works in problem-free operation, are used for the generation of a model (A) for the operating behaviour of the components (2), wherein

i) the input variables of the model (A) are at least some of the set of the state parameters ($x_i$) and the output values include a model value ($y_{nT}$) for at least one of the state parameters ($x_n$),

ii) a residue ($r_T$) is determined in each case by comparison of the respective model value ($y_{nT}$) with the corresponding actual measured value ($x_{nT}$) of the modelling phase,

iii) the model (A) is optimised by determination of model parameters in such a manner that a modelling error ($\varepsilon$) which is derivable from the residues ($r_T$) is a minimum,

c) with the help of the model (A) for the operating behaviour at least one monitored parameter (r; $s_{nu}$) is derived at predeterminable time intervals which is independent of the respective current working point,

d) the temporal behaviour of the monitored parameter (r; $s_{nu}$) is used for estimating the wear in the components (2) and/or for the detection of operating disturbances.

**2.** A method in accordance with claim 1, wherein the determined measured values ($x_{iT}$; $x_{iu}$) are stored in an evaluation and storage apparatus (5), with the generation and evaluation of the model (A) taking place in the evaluation and storage apparatus (5), and wherein a warning apparatus (7) is activated for the triggering of an alarm in the event that the monitored parameter (r; $s_{nu}$) departs from a predeterminable normal range.

**3.** A method in accordance with any one of the preceding claims, with the monitored parameter (r) being the difference between the respective current measured value ($x_n$) and the model value ($y_n$) corresponding to it.

**4.** A method in accordance with any one of the preceding claims, wherein an updating takes place at predeterminable time intervals by means of the evaluation and storage apparatus (5) for the determination of a current model ($M_u$) in which the measured values ($x_{iu}$) which were determined since the last updating of the model are taken into consideration.

**5.** A method in accordance with claim 4, wherein certain models ($M_u$, $M_{u-1}$, $M_{u-2}$) determined at different times are stored in the evaluation and storage apparatus (5) in each case together with characteristic parameters which are representative of the quality of the respective model.

**6.** A method in accordance with claim 5, wherein the older models ($M_u$, $M_{u-1}^*$, $M_{u-2}^*$) are taken into consideration, in particular in a weighted manner, in the updating for the determination of the current model ($M_u$).

**7.** A method in accordance with any one of the claims 4 to 6, wherein the respective current model ($M_u$) is optimised by means of the evaluation and storage apparatus (5) in that

a) for each of the measured values ($x_{iu}$) which were determined since the last updating of the model, a respective residue is calculated for the associated state parameter ($x_i$) by comparison with the model values corresponding to them,

b) the model parameters are determined in such a manner that the modelling error which can be determined from the residues is a minimum.

**8.** A method in accordance with any one of the claims 4 to 7, wherein

a) at least one reference working point is fixed,

b) after each updating of the model, the associated model value is determined for the fixed reference working point by means of the respective current model ($M_u$) of the associated model value as a nominal value ($s_{nu}$) for the corresponding state parameter ($x_n$) by the evaluation and storage apparatus (5),

c) the temporal behaviour of the nominal value ($s_{nu}$) is used for the estimation of the wear in the components (2) and/or for the detection of disturbances in the operation.

**9.** A method in accordance with claim 8, wherein a plurality of nominal values for different state parameters ($x_i$) is determined for the fixed reference working point in each case.

**10.** A method in accordance with any one of the preceding claims, wherein a fault isolation is carried out in the event of a deviation from normal operating behaviour in that

a) a plurality of partial models (m1, m2, m3, m4) are generated on the basis of the measured values determined for the state parameters and/or of an overall model, each of the part models having a model dimension (d) smaller than n-1, with n being the number of the state parameters ($x_i$) determined;

b) reconstructed values for at least some of the state parameters ($x_i$) are determined by means of the partial models (m1, m2, m3, m4);

c) a reconstruction error is determined by respective comparison of the reconstructed values with measured values for the state parameters ($x_i$) corresponding to them for each partial model (m1, m2, m3, m4);

d) at least one faulty state parameter is isolated by comparison of the reconstruction error with predeterminable threshold values.

**11.** A method in accordance with claim 10, wherein the partial models (m1, m2, m3, m4), the reconstruction errors of which are greater than the predeterminable threshold value are rated as faulty; and wherein the faulty state parameter or the faulty state parameters are isolated on the basis of the combinations of state parameters ($x_i$) which lead to faulty partial models and the combinations of state parameters ($x_i$) which lead to non-faulty partial models.

**Revendications**

**1.** Procédé de surveillance d'installations avec des composants mécaniques, notamment hydromécaniques qu'on peut faire fonctionner à divers points de travail variables, comprenant les étapes suivantes :

a) pendant le fonctionnement des composants (2), respectivement des valeurs de mesure ($x_{iT}$;$x_{iu}$) sont détectées à des intervalles prédéterminables dans le temps pour un ensemble déterminé de grandeurs d'état ($x_i$),

b) les valeurs de mesure ($x_{iT}$) détectées pendant une phase de modélisation placée en amont, pendant laquelle l'installation fonctionne sans incident, pour différents points de travail sont utilisées pour l'établissement d'un modèle (A) pour le comportement de fonctionnement des composants (2) où,

i) les variables d'entrée du modèle (A) représentent au moins une partie de l'ensemble des grandeurs d'état ($x_i$), et les grandeurs d'état comprennent une valeur de modèle ($y_{nT}$) pour au moins l'une des grandeurs d'état ($x_n$),

ii) il est défini par une comparaison de la valeur de modèle respective ($y_{nT}$) avec la valeur de mesure effective correspondant à celle-ci ($x_{nT}$) de la phase de modélisation respectivement un résidu ($r_T$),

iii) le modèle (A) est optimisé par une définition des paramètres de modèle de façon qu'une erreur de modèle ($\varepsilon$) déterminable à partir des résidus ($r_T$) devienne minimale,

c) à l'aide du modèle (A) pour le comportement de fonctionnement, il est déterminé à des intervalles prédéterminables dans le temps au moins une grandeur de surveillance (r ; $s_{nu}$) qui est indépendante du point de travail respectivement actuel,

d) le cheminement dans le temps de la grandeur de surveillance (r ; $s_{nu}$) est utilisé pour apprécier l'usure dans les composants (2) et/ou pour détecter des dérangements de fonctionnement.

2. Procédé selon la revendication 1, où les valeurs de mesure détectées ($x_{iT}$, ($x_{iu}$) sont stockées dans un dispositif d'évaluation et de stockage (5), où l'établissement et l'évaluation du modèle (A) a lieu dans le dispositif d'évaluation et de stockage (5) et où un dispositif avertisseur (7) pour le déclenchement d'une alarme est activé dans le cas où la grandeur de surveillance (r ; $s_{nu}$) quitte une zone normale prédéterminable.

3. Procédé selon l'une des revendications précédentes, où la grandeur de surveillance (r) est la différence de la valeur de mesure respectivement actuelle ($x_n$) et la valeur de modèle ($y_n$) correspondant à celle-ci.

4. Procédé selon l'une des revendications précédentes, où il est procédé à l'aide du dispositif d'évaluation et de stockage (5) à des intervalles prédéterminables dans le temps à une actualisation pour déterminer un modèle actuel ($M_u$) où il est tenu compte des valeurs de mesure ($x_{iu}$) détectées depuis la dernière actualisation du modèle.

5. Procédé selon la revendication 4, où les modèles déterminés à des instants différents ($M_u$,$M_{u-1}$,$M_{u-2}$) sont stockés respectivement conjointement avec des caractéristiques qui sont représentatives de la qualité du modèle respectif dans le dispositif d'évaluation et de stockage (5).

6. Procédé selon la revendication 5, où il est tenu compte lors de l'actualisation pour déterminer le modèle actuel ($M_u$) des modèles plus anciens (($M_{u-1}$ ; $M_{u-1}^*$, $M_{u-2}^*$), notamment d'une manière pondérée.

7. Procédé selon l'une des revendications 4-6, où le modèle respectivement actuel ($M_u$) est optimisé au moyen du dispositif d'évaluation et de stockage (5)

   a) en calculant pour les valeurs de mesure ($x_{iu}$) détectées depuis la dernière actualisation du modèle, par une comparaison avec les valeurs de modèle correspondant à celles-ci, respectivement un résidu pour la grandeur d'état associée ($x_i$),
   b) en définissant les paramètres de modèle de façon que l'erreur de modèle déterminable à partir des résidus devienne minimale.

8. Procédé selon l'une des revendications 4-7 où

   a) au moins un point de travail de référence est fixé,
   b) il est déterminé par le dispositif d'évaluation et de stockage (5) après chaque actualisation du modèle pour le point de travail de référence fixé, au moyen du modèle respectivement actuel (($M_u$) la valeur de modèle associée comme valeur nominale ($s_{nu}$) pour la grandeur d'état correspondante ($x_n$),
   c) il est utilisé le cheminement dans le temps de la valeur nominale ($s_{nu}$) pour apprécier l'usure dans les composants (2) et/ou pour détecter des perturbations de fonctionnement.

9. Procédé selon la revendication 8, où sont déterminées pour le point de travail de référence fixé respectivement plusieurs valeurs nominales pour des grandeurs d'état ($x_i$) différentes.

10. Procédé selon l'une des revendications précédentes, où il est procédé, lors d'un écart relativement au comportement de fonctionnement normal, à une isolation d'erreur

    a) en établissant à l'aide des valeurs de mesure détectées pour les grandeurs d'état et/ou d'un modèle d'ensemble plusieurs modèles partiels (m1, m2, m3, m4) qui présentent respectivement une dimension de modèle plus petite (d) comme n-1, n étant le nombre des grandeurs d'état détectées ($x_i$) ;
    b) en déterminant au moyen des modèles partiels (m1, m2, m3, m4) les valeurs reconstruites pour au moins une partie des grandeurs d'état ($x_i$) ;
    c) en déterminant par une comparaison respective des valeurs reconstruites avec les valeurs de mesure correspondant à celles-ci pour les grandeurs d'état ($x_1$) pour chaque modèle partiel (m1, m2, m3, m4) une erreur de reconstruction ;
    d) en isolant par une comparaison de l'erreur de reconstruction avec des valeurs seuil prédéterminables au moins une grandeur d'état incorrecte.

11. Procédé selon la revendication 10, où les modèles partiels (m1, m2, m3, m4) dont l'erreur de reconstruction est plus grande que la valeur seuil prédéterminable seront appréciés comme étant incorrects et où à l'aide des combinaisons de grandeurs d'état ($x_i$) qui mènent à des modèles partiels incorrects et des combinaisons de grandeurs d'état ($x_i$) qui mènent à des modèles partiels corrects, la grandeur d'état incorrecte ou les grandeurs d'état incorrectes est/sont isolées.

# Fig.1

# Fig.2

$$X_1^*, X_2^*, \cdots, X_m^*$$

A

$$Y = (Y_{n1}, Y_{n2}, \cdots, Y_{nm})$$

$(X_{n1}, X_{n2}, \cdots, X_{nm})$    —    101

$$R = (r_1, r_2 \cdots, r_m)$$

$\varepsilon = f(R)$ —— 102

103 —— $\varepsilon = min$    NEIN

JA

OK —— 104

105

## Fig.3

```
┌─────────────────┐
│   MESSWERTE      │──── 201
│   BESTIMMEN      │
└─────────────────┘
         │
┌─────────────────┐
│  MITTELUNG /     │──── 202
│  KORRELATION     │
└─────────────────┘
         │
┌─────────────────┐
│  Mᵤ* BESTIMMEN   │──── 203
└─────────────────┘
         │
┌─────────────────┐
│  Mᵤ* SPEICHERN   │──── 204
└─────────────────┘
         │
┌─────────────────┐
│  Mᵤ BESTIMMEN    │──── 205
└─────────────────┘
         │
┌─────────────────┐
│  MITTELS Mᵤ      │──── 206
│  NOMINALWERT     │
│  BESTIMMEN       │
└─────────────────┘
         │
┌─────────────────┐
│    AUSGABE       │──── 207
└─────────────────┘
```